# EUROPÄISCHE PATENTANMELDUNG

(11) **EP 3 845 340 A1**
(43) Veröffentlichungstag der Anmeldung: **07.07.2021**
(21) Anmeldenummer: 20186377.6
(22) Anmeldetag: 17.07.2020
(51) Int. Cl.: B25D 11/12, B25D 16/00

(54) **HANDWERKZEUGMASCHINE, WERKZEUG UND HANDWERKZEUGMASCHINENSYSTEM MIT BESTIMMTEM DREHZAHL-SCHLAGFREQUENZ-VERHÄLTNIS**

(30) Priorität: 19.08.2019 EP 19192219; 27.08.2019 EP 19193854; 04.09.2019 EP 19195363
(71) Anmelder: Hilti Aktiengesellschaft, 9494 Schaan (LI)
(72) Erfinder: Knyrim, Maximilian, 89584 Ehingen (DE); Hartmann, Markus, 87665 Mauerstetten (DE); Plümacher, Bastian, 86899 Landsberg am Lech (DE); Koch, Olaf, 86916 Kaufering (DE)
(74) Vertreter: Hilti Aktiengesellschaft Corporate Intellectual Property

(57) **Zusammenfassung**

Die Erfindung betrifft eine Handwerkzeugmaschine (12), insbesondere ein Bohrhammer, mit einer Werkzeugaufnahme (16), einem Schlagwerk (32) und einem Drehantrieb (34), wobei die Handwerkzeugmaschine (12) eingerichtet ist, ein in der Werkzeugaufnahme (16) aufgenommenes Werkzeug (18) mit einer Drehzahl n um eine Längsachse (L) des Werkzeugs (18) zu rotieren und mit einer Schlagfrequenz f entlang der Längsachse (L) mit einer Schlagbewegung anzutreiben, wobei das Schlagwerk (32) als direktes elektromechanisches, als elektropneumatisches oder als elektromagnetisches Schlagwerk ausgebildet ist. Sie ist dadurch gekennzeichnet, dass das Verhältnis der Drehzahl n zu der Schlagfrequenz f zumindest an einem Arbeitspunkt der Handwerkzeugmaschine (12) höchstens 5,0 U/Min./Hz beträgt oder dass zumindest am Arbeitspunkt der Handwerkzeugmaschine (12) die Drehzahl n in Abhängigkeit von der Schlagfrequenz f, insbesondere für Schlagfrequenzen f im Bereich von 20 bis 60 Hz, höchstens (0,2∗(f/Hz-22)^2+80) U/Min. beträgt. Des Weiteren betrifft die Erfindung ein Werkzeug (18) sowie ein Handwerkzeugsystem (10). Sie ermöglicht eine besonders effektive und effiziente Bearbeitung von beispielsweise Gesteinen.

## Beschreibung

Die vorliegende Erfindung betrifft eine Handwerkzeugmaschine, insbesondere ein Bohrhammer, mit einer Werkzeugaufnahme, einem Schlagwerk und einem Drehantrieb, wobei die Handwerkzeugmaschine eingerichtet ist, ein in der Werkzeugaufnahme aufgenommenes Werkzeug mit einer Drehzahl n um eine Längsachse des Werkzeugs zu rotieren und mit einer Schlagfrequenz f entlang der Längsachse mit einer Schlagbewegung anzutreiben, wobei das Schlagwerk als direktes elektromechanisches, als elektropneumatisches oder als elektromagnetisches Schlagwerk ausgebildet ist. Weiter betrifft die Erfindung ein Werkzeug und ein Handwerkzeugmaschinensystem.

Die Inhalte der Beschreibungen, der Ansprüche und der Zeichnungen der europäischen Anmeldungen EP19192219A vom 19.08.2019, EP19193854 vom 27.08.2019 und EP19195363A vom 04.09.2019 bilden im Wege der ausdrücklichen Bezugnahme einen Teil dieser Beschreibung.

Aus ökologischen Gründen als auch aus Kostengründen heraus besteht ein besonderer Bedarf an besonders effektiv und effizient arbeitenden Handwerkzeugmaschinen, beispielsweise Bohrhämmern, zugehörigen Werkzeugen und, insbesondere eine Handwerkzeugmaschine und ein Werkzeug für die Handwerkzeugmaschine aufweisenden, Handwerkzeugsystemen.

Um diesem Bedarf Rechnung zu tragen ist es daher eine Aufgabe der vorliegenden Erfindung, mit besonders hoher Effizienz betreibbare gattungsgemäße Handwerkzeugmaschinen, Werkzeuge und Handwerkzeugmaschinensysteme zur Verfügung zu stellen.

Gelöst wird die Aufgabe durch eine Handwerkzeugmaschine, insbesondere ein Bohrhammer, mit einer Werkzeugaufnahme, einem Schlagwerk und einem Drehantrieb, wobei die Handwerkzeugmaschine eingerichtet ist, ein in der Werkzeugaufnahme aufgenommenes Werkzeug mit einer Drehzahl n um eine Längsachse des Werkzeugs zu rotieren und mit einer Schlagfrequenz f entlang der Längsachse mit einer Schlagbewegung anzutreiben, wobei das Schlagwerk als direktes elektromechanisches, als elektropneumatisches oder als elektromagnetisches Schlagwerk ausgebildet ist, wobei das Verhältnis der Drehzahl n zu der Schlagfrequenz f zumindest an einem Arbeitspunkt der Handwerkzeugmaschine höchstens 5,0 U/Min./Hz beträgt oder wobei zumindest am Arbeitspunkt der Handwerkzeugmaschine die Drehzahl n in Abhängigkeit von der Schlagfrequenz f, insbesondere für Schlagfrequenzen f im Bereich von 20 bis 60 Hz, höchstens (0,2*(f/Hz-22)^2+80) U/Min. beträgt.

Besonders wenig Reibungsverluste kann eine Handwerkzeugmaschine erreichen, wenn das Verhältnis der Drehzahl n zu der Schlagfrequenz f zumindest am Arbeitspunkt der Handwerkzeugmaschine höchstens 4,0 U/Min./Hz, besonders bevorzugt höchstens 3,0 U/Min/Hz, beträgt.

Der Arbeitspunkt kann einem bohrhämmemden Betrieb der Handwerkzeugmaschine entsprechen. Insbesondere kann er einem Volllastbetrieb der Handwerkzeugmaschine entsprechen. Alternativ oder ergänzend kann der Arbeitspunkt einem Betriebszustand mit gerätebedingt höchstmöglicher Schlagfrequenz f oder höchstmöglicher Drehfrequenz n entsprechen.

Die Handwerkzeugmaschine kann insbesondere zur Bearbeitung von natürlichen oder künstlichen Gesteinen, beispielsweise Mauerwerk und/oder zementhaltige Gesteine, eingerichtet sein.

Zur Abgrenzung zu beispielsweise reinen Meißelmaschinen kann die Drehzahl am Arbeitspunkt mindestens 1 U/Min. oder in Abhängigkeit von der Schlagfrequenz f mindestens f/Hz*0,1 U/Min., vorzugsweise mindestens f/Hz*2 U/Min., betragen.

Alternativ oder ergänzend kann ein Umsetzwinkel, also der Winkel, um den das Werkzeug zwischen zwei Schlägen versetzt wird, zumindest am Arbeitspunkt mindestens 15, bevorzugt mindestens 20 Grad betragen.

Alternativ oder ergänzend kann die Drehzahl n in Abhängigkeit von der Schlagfrequenz f mindestens die Hälfte der oben genannten Höchstwerte betragen.

Der Erfindung liegt dabei der Gedanke zugrunde, dass eine Zerkleinerung derartiger Gesteine, beispielsweise zur Ausbildung eines Bohrloches, üblicherweise primär durch die Schlagbewegung erfolgen kann. Insbesondere kann die Zerkleinerung mittels einer Werkzeugspitze eines in der Werkzeugaufnahme aufgenommenen Werkzeugs, beispielsweise ein Gesteinsbohrer, in Form eines rhythmischen Schlagens, also eines Meißelns, erfolgen.

Die parallel erfolgende Drehbewegung verfolgt üblicherweise bei der Zerkleinerung den Zweck, die Werkzeugspitze zu drehen und/oder zu versetzen, so dass die Zerkleinerung über eine gewisse Bearbeitungsfläche hinweg, d. h. nicht nur an einer einzelnen Stelle, erfolgen kann. Zudem wird die Drehbewegung - zumindest bei Werkzeugen mit einer entlang ihrer Längsachse ausgebildeten Helixstruktur wie beispielsweise bei Gesteinsspiralbohrern - zur Förderung von an der Werkzeugspitze erzeugtem Bohrklein benötigt.

Jedoch kommt es bei steigenden Drehzahlen n zu erheblichen, zum Teil überproportional ansteigenden, Reibungsverlusten.

Somit lassen sich erhebliche Energieeinsparungen erzielen, wenn die Handwerkzeugmaschine wie erfindungsgemäß vorgesehen, zumindest am Arbeitspunkt eine im Verhältnis zur Schlagfrequenz langsame Drehbewegung ausführt. Vorzugsweise ist die Drehbewegung am Arbeitspunkt jedoch dennoch so schnell, dass ein ausreichender Drehversatz des Werkzeugs zwischen zwei Schlägen erfolgen kann. Je nach Art des verwendeten Werkzeugs kann die Drehzahl auch in Abhängigkeit einer erforderlichen Bohrkleinfördergeschwindigkeit gewählt sein, insbesondere sofern zwischen diesen ein baulich bedingter Zusammenhang besteht.

Auch lassen sich durch die Erfindung Werkzeug- und/oder Schädigungen des zu bearbeitenden Gesteins durch Überhitzung auf Grund von Reibung und Hitze vermeiden. Auch lässt sich die Arbeitssicherheit steigern.

Somit liegt der Erfindung weiter die überraschende Erkenntnis zugrunde, dass Handwerkzeugmaschinen, die zumindest am Arbeitspunkt eine Kombination einer Schlagbewegung mit einer Drehbewegung ermöglichen, dadurch verbessert werden können, dass zumindest an diesem Arbeitspunkt das Verhältnis zwischen Drehzahl n und Schlagfrequenz f ausgewählt und/oder eingestellt wird.

Denkbar ist daher bei einer Handwerkzeugmaschine mit unterschiedlichen Betriebsmodi, beispielsweise einem reinen Drehbewegungs- bzw. Bohrmodus und einem Bohrhammermodus entsprechend dem Arbeitspunkt, die Handwerkzeugmaschine derart einzurichten, dass durch einen Wechsel in den Bohrhammermodus oder bei Erreichen des Arbeitspunkts die Drehzahl n höchstens auf die erfindungsgemäßen Höchstwerte beschränkt wird und bei Verlassen des Bohrhammermodus oder des Arbeitspunkts diese Beschränkung aufgehoben wird und/oder der Höchstwert der Drehzahl n auf einen höheren Wert eingestellt wird.

Die Handwerkzeugmaschine kann eine Werkzeugerkennungsvorrichtung aufweisen zur Identifikation eines Typs eines in der Werkzeugaufnahme eingesetzten Werkzeugs. Alternativ oder ergänzend kann der Typ des in der Werkzeugaufnahme eingesetzten Werkzeugs auch durch einen Benutzer der Handwerkzeugmaschine einstellbar sein.

Die Handwerkzeugmaschine kann auch eingerichtet sein, in Abhängigkeit von dem Typ des Werkzeugs, vorzugsweise zumindest am Arbeitspunkt, die Drehzahl n auf einen Höchstwert, der vorzugsweise höchstens den erfindungsgemäßen Höchstwerten entspricht, und/oder auf einen Mindestwert zu beschränken. Beispielsweise kann bei einem als Saugbohrer oder als Hohlbohrer ausgebildeten Werkzeug ein besonders geringer Höchstwert der Drehzahl n eingestellt werden, wohingegen bei einem eine Helixstruktur aufweisenden Werkzeug ein etwas höherer Höchstwert, vorzugsweise allerdings dennoch höchstens den erfindungsgemäßen Höchstwerten entsprechend, eingestellt wird.

Die Handwerkzeugmaschine kann insbesondere eingerichtet sein, den Wert oder den Höchstwert des Verhältnisses zwischen der Drehzahl n und der Schlagfrequenz f bei verschiedenen Schlagfrequenzen f und/oder innerhalb verschiedener Frequenzbereiche der Schlagfrequenz f, insbesondere auch unter Berücksichtigung eines Typs des eingesetzten Werkzeugs, zu variieren. Dem liegt der Gedanke zugrunde, dass bei sehr niedrigen Frequenzen beispielsweise eine Mindestdrehzahl n durch diese Variation sichergestellt sein kann. Zumindest bei einzelnen Werkzeugtypen kann der Anstieg der Reibung durch die Drehbewegung geringer als entsprechend einer dritten Potenz ausfallen, sodass auch relativ zur Schlagfrequenz f verhältnismäßig höhere Drehzahlen n nutzbar sind.

Auch hierzu sowie aus allgemein aus Gründen der Weite der Einstellbarkeit der Handwerkzeugmaschine ist es günstig, wenn die Handwerkzeugmaschine ein mehrstufiges Getriebe aufweist.

Die Handwerkzeugmaschine kann eingerichtet sein, ein Getriebe anhand oder zumindest unter Berücksichtigung des ermittelten oder eingestellten Typs des aufgenommenen Werkzeugs zu steuern, insbesondere davon abhängig eine der Getriebestufen eines mehrstufigen Getriebes zu wählen. Alternativ oder ergänzend kann bei Handwerkzeugmaschinen mit wenigstens zwei Antriebseinheiten auch ein Verhältnis der Geschwindigkeiten der beiden Antriebseinheiten, insbesondere in Abhängigkeit vom eingestellten oder ermittelten Typ des aufgenommenen Werkzeugs, zueinander eingestellt sein oder einstellbar sein.

Insgesamt kann das Verhältnis der Drehzahl n zur Schlagfrequenz f einen U-förmigen oder zumindest im Wesentlichen U-förmigen Verlauf über den verwendeten Frequenzbereich der Schlagfrequenz f hinweg aufweisen.

Ist bei der Handwerkzeugmaschine die insgesamt verfügbare Leistung begrenzt, so ermöglicht dies auch, einen größeren Anteil der Gesamtleistung auf die Schlagbewegung zu richten, sodass sich bei gleicher Gesamtleistung der im Gestein erzielte Vortrieb steigern lässt. Alternativ oder ergänzend kann auch unter Beibehaltung des erzielten Vortriebs die eingesetzte Gesamtleistung reduziert werden.

Unter einem elektrischen Schlagwerk können elektromechanisch arbeitende Schlagwerke, insbesondere mit einem eine Rotation erzeugenden Antrieb, beispielsweise Nockenschlagwerke oder Rastenschlagwerke, elektropneumatische, das heißt, eine Luftkammer zur Übertragung und/oder Transformation der Schlagbewegung enthaltende, Schlagwerke sowie elektromagnetische Schlagwerke, beispielsweise auf dem Prinzip einer Railgun beruhende und/oder einen Linearmotor aufweisende Schlagwerke, verstanden werden. Das Schlagwerk kann ein direktes Schlagwerk, also mit einem rotationsbewegungsfreien Antrieb, oder ein indirektes Schlagwerk, also mit einem Antrieb auf Basis einer Rotationsbewegung, sein.

Die Handwerkzeugmaschine kann höchstens eine Antriebseinheit, insbesondere einen Motor, zum Antrieb des Schlagwerks und des Drehantriebs aufweisen. Mit anderen Worten können das Schlagwerk und der Drehantrieb mittels einer gemeinsamen Antriebseinheit angetrieben sein. Alternativ ist auch ein getrennter Antrieb, insbesondere mittels wenigstens zweier Antriebseinheiten denkbar. Die Drehzahl n und/oder die Schlagfrequenz f oder deren Verhältnis zueinander können geräteseitig festgelegt oder festlegbar sein. Beispielsweise können am Arbeitspunkt ein oder mehrere Getriebe der Handwerkzeugmaschine durch die Handwerkzeugmaschine selbsttätig in Benutzung und/oder ausgewählt sein. Das oder die Getriebe können auf den Arbeitspunkt abgestimmte Übersetzungsverhältnisse aufweisen.

Weist die Handwerkzeugmaschine eine pneumatische, insbesondere eine elektropneumatische, Bohrkleinfördereinrichtung auf, so können besonders geringe Drehzahlen n verwendet werden, da eine Bohrkleinförderung durch die Bohrkleinfördereinrichtung erfolgen kann. Die Bohrkleinfördereinrichtung kann eine Saugvorrichtung sein oder eine solche aufweisen.

Die erfindungsgemäß erzielten Effektivitäts- und Effizienzsteigerungen sind besonders nützlich, wenn die Handwerkzeugmaschine als tragbares Gerät ausgebildet ist. Die Handwerkzeugmaschine kann insbesondere höchstens 25 kg wiegen. Die vom Schlagwerk abgegebene Leistung kann auf höchstens 2kW, besonders bevorzugt auf höchstens 1 kW, begrenzt sein.

Besonders bevorzugt ist die Handwerkzeugmaschine kabellos betreibbar. Sie kann vorzugsweise einen Akkumulator, insbesondere einen Lithium-haltigen Akkumulator, aufweisen. Die Handwerkzeugmaschine kann beispielsweise einen tragbaren Stromspeicher, beispielsweise einen wiederaufladbaren Akkumulator, aufweisen. Dabei lassen sich durch die erfindungsgemäß erzielten Effektivitäts- und Effizienzsteigerungen besonders lange Laufzeiten mit einer einzigen Akkumulatorladung erzielen.

Erfindungsgemäß können das oder die Getriebe besonders hohe, beispielsweise 50:1, Untersetzungsverhältnisse aufweisen. Daher sind Handwerkzeugmaschine besonders bevorzugt, die wenigstens eine Freilaufkupplung, ein Kulissengetriebe oder ein Kreisschubgetriebe umfassen. So sind beispielsweise auch Kombinationen der Freilaufkupplung mit dem Kulissengetriebe und/oder dem Kreisschubgetriebe denkbar. Weitere erfindungsgemäße Details zu besonders vorteilhaften Ausgestaltungen der Freilaufkupplung, des Kulissengetriebes sowie des Kreisschubgetriebes finden sich in den durch Bezugnahme als Teil dieser Beschreibung eingebundenen, eingangs genannten europäischen Patentanmeldungen.

Bei einem eine Helixstruktur aufweisenden Werkzeug für eine erfindungsgemäße Handwerkzeugmaschine kann die Steigung der Helixstruktur gegenüber bekannten Helixstrukturen, insbesondere von Werkzeugen zur Bearbeitung von Gesteinen, erhöht sein.

In den Rahmen der Erfindung fällt des Weiteren ein Werkzeug für eine erfindungsgemäße Handwerkzeugmaschine, umfassend eine Werkzeugspitze, einen Werkzeugschaft sowie ein Einsteckende zur Aufnahme des Werkzeugs in der Werkzeugaufnahme der Handwerkzeugmaschine, wobei zumindest entlang des Werkzeugschafts ein Materialtransportkanal ausgebildet ist, wobei der Materialtransportkanal eine Mindestquerschnittsfläche von 19 mm² oder mindestens von 6 %, besonders bevorzugt von mindestens 12%, der Querschnittsfläche des durch das Werkzeug erzeugbaren Bohrloches aufweist. Insbesondere wenn mit vergleichsweise niedrigen Drehzahlen n gearbeitet wird, können vermehrt größere Bohrklein-Teilchen entstehen, die aufgrund des vergleichsweise großen Materialtransportkanals ebenfalls sicher abtransportiert werden können. Eine Verstopfung des Werkzeugs kann somit auch bei im Verhältnis zur Schlagfrequenz f niedrigen Drehzahlen n vermieden werden.

Allgemein kann das Werkzeug als Hohlbohrer ausgebildet sein.

Ein solches Werkzeug ermöglicht eine besonders leistungsstarke Bohrkleinförderung entweder durch den Materialtransportkanal hindurch oder durch ein Spülfluid, das vorzugsweise über den Materialtransportkanal zur Werkzeugspitze befördert wird, sodass Bohrklein zum Abtransport von der Werkzeugspitze wegspült werden kann.

Allgemein können das Werkzeug und/oder die Handwerkzeugmaschine eingerichtet sein, das Bohrklein mechanisch, pneumatisch oder hydraulisch zu fördern.

Insbesondere kann das Werkzeug dazu als Saugbohrer ausgebildet sein. Die Bohrfördereinrichtung kann eine, insbesondere auf das Werkzeug angepasste, Saugeinrichtung aufweisen.

Auch fällt in den Rahmen der Erfindung eine Verwendung eines erfindungsgemäßen Werkzeugs zur Bearbeitung eines natürlichen oder künstlichen Gesteins.

Auch wird die Aufgabe gelöst durch ein Handwerkzeugmaschinensystem, umfassend eine erfindungsgemäße Handwerkzeugmaschine und ein erfindungsgemäßes Werkzeug.

Das Handwerkzeugmaschinensystem kann zur Bearbeitung von natürlichen oder künstlichen Gesteinen eingerichtet sein.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, aus den Ansprüchen sowie aus der Beschreibung und den Figuren der Zeichnung, die ebenfalls erfindungswesentliche Einzelheiten zeigt, der durch Bezugnahme mit eingebundenen, eingangs genannten europäischen Patentanmeldungen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

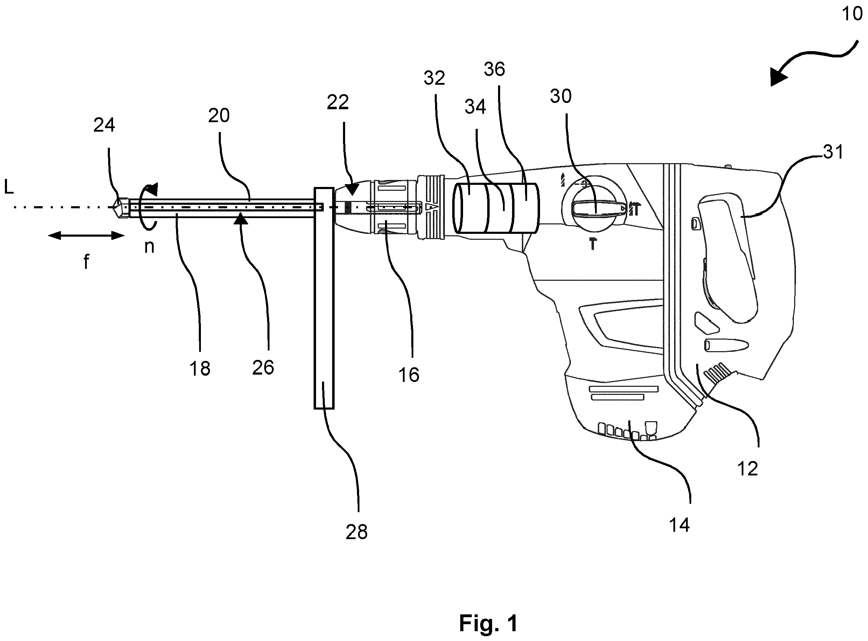

**Die einzige Figur (****Fig. 1****) zeigt** ein Handwerkzeugmaschinensystem.

Ein Handwerkzeugmaschinensystem **10** weist eine Handwerkzeugmaschine **12** auf. Die Handwerkzeugmaschine 12 ist kabellos betreibbar. Dazu weist sie einen wiederaufladbaren Akkumulator **14** auf. Sie ist als tragbares Gerät ausgebildet.

Sie weist ferner eine Werkzeugaufnahme **16** auf.

In dieser ist ein Werkzeug **18** aufgenommen. Dazu weist das Werkzeug 18 einen Werkzeugschaft **20** auf, an dessen einem Ende ein Einsteckende **22** und an dessen anderem Ende eine Werkzeugspitze **24** ausgebildet sind.

Das Werkzeug 18 ist als Hohlbohrer und insbesondere als Saugbohrer ausgebildet. Dazu weist es einen im Inneren des Werkzeugschafts 20 verlaufenden, in Fig. 1 schematisch dargestellten Materialtransportkanal **26** auf, über den aus der Umgebung der Werkzeugspitze 24 abgesaugtes Bohrklein zu einer Bohrkleinfördereinrichtung **28** gefördert werden kann.

Der Materialtransportkanal 26 weist eine Querschnittsfläche von 15% des Querschnitts eines durch das Werkzeug 18 zu schaffenden Bohrlochs auf.

Des Weiteren weist die Handwerkzeugmaschine 12 einen Betriebsmoduswahlschalter **30** zur Umschaltung zwischen verschiedenen Betriebsmodi, insbesondere zur Umschaltung zwischen einem reinen Bohrmodus, einem reinen Meißelmodus und einem Bohrhammermodus, auf. In der gezeigten Stellung des Betriebsmoduswahlschalters 30 ist der Bohrhammermodus ausgewählt. Mittels eines Betätigungshebels **31** lässt sich die Handwerkzeugmaschine 12 in Gang setzen und insbesondere an einem Arbeitspunkt mit einer geräteseitig bedingten höchstmöglichen Drehzahl betreiben.

Die Handwerkzeugmaschine 12 weist weiter ein elektropneumatisches Schlagwerk **32** und einen Drehantrieb **34** auf. Das Schlagwerk 32 und der Drehantrieb 34 werden von einer gemeinsamen Antriebseinheit **36,** einem Elektromotor, angetrieben. Die Handwerkzeugmaschine 12 ist dabei eingerichtet, das in der Werkzeugaufnahme 16 aufgenommene Werkzeug 18 mit einer Drehzahl n um eine Längsachse L des Werkzeugs 18 zu rotieren und mit einer Schlagfrequenz f entlang der Längsachse L mit einer Schlagbewegung anzutreiben.

In diesem Ausführungsbeispiel beträgt das Verhältnis der Drehzahl n zu der Schlagfrequenz f am Arbeitspunkt 4,0 U/Min./Hz.

Bei alternativen Ausführungsbeispielen A2, A3, A4, A5 und A6, die grundsätzlich, insbesondere strukturell identisch, zum vorangehend beschriebenen Ausführungsbeispiel aufgebaut sein können, hängt dieses Verhältnis von der Schlagfrequenz f am jeweiligen Arbeitspunkt, in diesem Ausführungsbeispielen mit Schlagfrequenzen f im Bereich von 20 bis 60 Hz, wie aus der nachfolgenden **Tabelle 1** ersichtlich, ab. Dabei überschreitet die Drehzahl n jedoch nicht (0,2*(f/Hz-22)^2+80) U/Min.

**Tabelle 1**

| **Ausführungsbeispiel** | **Schlagfrequenz f am Arbeitspunkt (Hz)** | **Drehzahl n am Arbeitspunkt (U/min)** | **Verhältnis Drehzahl n zu Schlagfrequenz f am Arbeitspunkt (U/min/Hz)** |
|---|---|---|---|
| A2 | 20 | 80 | 4 |
| A3 | 30 | 90 | 3 |
| A4 | 40 | 120 | 3 |
| A5 | 50 | 200 | 4 |
| A6 | 60 | 300 | 5 |

Zu erkennen ist, dass bei besonders geringen Schlagfrequenzen f das Verhältnis etwas erhöht ist. In diesem Fall ermöglicht dies auch bei geringen Schlagfrequenzen f eine gleichmäßige Zerkleinerung eines zu bearbeitenden Gesteins.

Bei mittleren Schlagfrequenzen f ergibt sich ein besonders energiesparender Betrieb.

Im Bereich hoher Zerkleinerungsleistungen, das heißt bei höheren Schlagfrequenzen f, steigt dagegen das Verhältnis wiederum an.

Um diese unterschiedlichen Verhältnisse einstellen zu können, weist die Handwerkzeugmaschine 12 ein mehrstufiges Getriebe auf (in Fig. 1 nicht dargestellt). Das Getriebe kann beispielsweise eine Freilaufkupplung, ein Kulissengetriebe oder ein Kreisschubgetriebe entsprechend der eingangs genannten, durch Bezugnahme eingebundenen europäischen Patentanmeldungen aufweisen.

## Patentansprüche

1. **Handwerkzeugmaschine** (12), insbesondere ein Bohrhammer, mit einer Werkzeugaufnahme (16), einem Schlagwerk (32) und einem Drehantrieb (34), wobei die Handwerkzeugmaschine (12) eingerichtet ist, ein in der Werkzeugaufnahme (16) aufgenommenes Werkzeug (18) mit einer Drehzahl n um eine Längsachse (L) des Werkzeugs (18) zu rotieren und mit einer Schlagfrequenz f entlang der Längsachse (L) mit einer Schlagbewegung anzutreiben, wobei das Schlagwerk (32) als direktes elektromechanisches, als elektropneumatisches oder als elektromagnetisches Schlagwerk ausgebildet ist,
**dadurch gekennzeichnet,**
**dass** das Verhältnis der Drehzahl n zu der Schlagfrequenz f zumindest an einem Arbeitspunkt der Handwerkzeugmaschine (12) höchstens 5,0 U/Min./Hz beträgt
oder
**dass** zumindest am Arbeitspunkt der Handwerkzeugmaschine (12) die Drehzahl n in Abhängigkeit von der Schlagfrequenz f, insbesondere für Schlagfrequenzen f im Bereich von 20 bis 60 Hz, höchstens (0,2*(f/Hz-22)^2+80) U/Min. beträgt.

2. Handwerkzeugmaschine nach dem vorhergehenden Anspruch, **dadurch gekennzeichnet, dass** das Verhältnis der Drehzahl (n) zu der Schlagfrequenz (f) zumindest am Arbeitspunkt der Handwerkzeugmaschine höchstens 4,0 U/Min./Hz, besonders bevorzugt höchstens 3,0 U/Min/Hz, beträgt.

3. Handwerkzeugmaschine nach einem der vorhergehenden Ansprüche, **dadurch gekennzeichnet, dass** die Handwerkzeugmaschine (12) höchstens eine Antriebseinheit, insbesondere einen Motor, zum Antrieb des Schlagwerks (32) und des Drehantriebs (34) aufweist.

4. Handwerkzeugmaschine nach einem der vorhergehenden Ansprüche, **dadurch gekennzeichnet, dass** die Handwerkzeugmaschine (12) eine Werkzeugerkennungsvorrichtung zur Identifikation eines Typs des in der Werkzeugaufnahme (16) eingesetzten Werkzeugs (18) aufweist und/oder dass sie derart eingerichtet ist, dass der Typ des in der Werkzeugaufnahme (16) eingesetzten Werkzeugs (18) durch einen Benutzer der Handwerkzeugmaschine (12) einstellbar ist.

5. Handwerkzeugmaschine nach einem der vorangehenden Ansprüche, **dadurch gekennzeichnet, dass** die Handwerkzeugmaschine ein mehrstufiges Getriebe aufweist.

6. Handwerkzeugmaschine nach einem der vorhergehenden Ansprüche, **dadurch gekennzeichnet, dass** die Handwerkzeugmaschine eine pneumatische, insbesondere eine elektropneumatische, Bohrkleinfördereinrichtung (28) aufweist.

7. Handwerkzeugmaschine nach einem der vorhergehenden Ansprüche, **dadurch gekennzeichnet, dass** die Handwerkzeugmaschine (12) als tragbares Gerät ausgebildet ist.

8. Handwerkzeugmaschine nach einem der vorhergehenden Ansprüche, **dadurch gekennzeichnet, dass** die Handwerkzeugmaschine (12) kabellos betreibbar ist, wobei sie vorzugsweise einen Akkumulator, insbesondere einen Lithium-haltigen Akkumulator, aufweist.

9. Handwerkzeugmaschine nach einem der vorhergehenden Ansprüche, umfassend wenigstens eine Freilaufkupplung, ein Kulissengetriebe oder ein Kreisschubgetriebe.

10. Werkzeug (18) für eine Handwerkzeugmaschine (12) nach einem der vorhergehenden Ansprüche, umfassend eine Werkzeugspitze (24), einen Werkzeugschaft (20) sowie ein Einsteckende (22) zur Aufnahme des Werkzeugs (18) in der Werkzeugaufnahme (16) der Handwerkzeugmaschine (12), wobei zumindest entlang des Werkzeugschafts (20) ein Materialtransportkanal (26) ausgebildet ist, **dadurch gekennzeichnet, dass** der Materialtransportkanal (26) eine Mindestquerschnittsfläche von 19 mm² oder mindestens von 6 %, besonders bevorzugt von mindestens 12%, der Querschnittsfläche des durch das Werkzeug erzeugbaren Bohrloches aufweist.

11. Werkzeug nach dem vorhergehenden Anspruch, **dadurch gekennzeichnet, dass** das Werkzeug (18) als Saugbohrer ausgebildet ist.

12. Handwerkzeugmaschinensystem (10), umfassend eine Handwerkzeugmaschine (12) nach einem der Ansprüche 1 bis 9 und ein Werkzeug (18) nach einem der Ansprüche 10 oder 11.
